# EUROPÄISCHE PATENTSCHRIFT

(11) **EP 1 342 547 B1**
(45) Veröffentlichungstag und Bekanntmachung des Hinweises auf die Patenterteilung: **08.02.2006**
(21) Anmeldenummer: 03003908.5
(22) Anmeldetag: 21.02.2003
(51) Int. Cl.: B29C 45/52

(54) **Rückströmsperre**
Check valve
Clapet antiretour

(30) Priorität: 09.03.2002 DE 10210464
(43) Veröffentlichungstag der Anmeldung: 10.09.2003
(73) Patentinhaber: Demag Ergotech GmbH, 90571 Schwaig (DE)
(72) Erfinder: Schimmel, Dieter, 91154 Roth (DE)
(74) Vertreter: Wilhelm, Ludwig

(56) Entgegenhaltungen:
- AT-U- 2 063
- US-A- 5 167 971
- US-A- 5 518 394
- US-A- 5 945 141
- US-A- 6 155 816

## Beschreibung

Die Erfindung betrifft eine Rückströmsperre gemäß dem Oberbegriff von Patentanspruch 1.

Beim Spritzgießen von thermoplastischen Kunststoffen werden Schnecken eingesetzt, die in Plastifizierzylindern axial verschiebbar und in definierter Richtung drehbar sind. Durch die hierbei auftretende Reibung und durch zusätzlich aussen auf dem Plastfizierzylinder aufgelegte Heizbänder wird das Kuntstoffgranulat aufgeschmolzen. Zum Einspritzen der Kunststoffmasse in die Kavität eines Formwerkzeugs wird die Schnecke als Kolben eingesetzt und hierzu axial im Plastifizierzylinder bewegt. Um zu verhindem, dass bei diesem Einspritzvorgang, also bei Vorwärtsbewegung der nicht rotierenden Schnecke, aufgeschmolzener Kunststoff zurückfließt, werden Rückströmsperren eingesetzt.

Aus dem Stand der Technik sind Rückströmsperren bekannt (WO 00/23248), die über eine Sperrhülse oder einen Sperring am vorderen Ende der Schnecke verfügen. Beim Einspritzen wird dieser Sperring gegen eine Druckringfläche eines am Kopf der Schnecke angeordneten Grundkörpers gepresst. Beim Dosieren, d.h. bei rücklaufender rotierender Schnecke wird der Sperring von der Druck- und Anschlagfläche abgehoben und gegen die Anschlagflächen von am Kopf des Grundkörpers angeordneten Flügeln gedrückt. Der Sperring ist gegenüber der Schnecke frei beweglich und dreht sich beim Dosieren infolge der Reibung an der Wand des Plastifizierzylinders gar nicht oder nur mit geringer Geschwindigkeit mit. Daduch kommt es zu einem Reibvorgang zwischen dem Sperring und den Anlageflächen der Flügel.

Desweiteren sind Ringrückströmsperren bekannt (DE 32 47 272 C2), bei denen über den Umfang verteilt Kugeln zwischen der Sperrhülse und der Anschlagfläche des am Schneckenkopf angeordneten Grundkörpers der Rückströmsperre vorgesehen sind, die zum einen als Abstandshalter zwischen der Sperrhülse und dem Grundkörper dienen und die gleichzeitig wie ein Kugellager wirken, also bessere Reibungsverhältnisse zwischen dem Grundkörper der Rückströmsperre und der Sperrhülse schaffen.

Ein wesentlicher Nachteil von Ringrückströmsperren besteht darin, dass der Schliessvorgang meist stochastischen Einflüssen unterworfen ist und somit Streuungen beim Einspritzvorgang verursacht werden. Ausserdem weisen Ringrückströmsperren in der Regel ein vergleichsweise schlechtes Ansprech- oder Schließverhalten beim Einspritzvorgang auf.

Eine andere Bauart von Rückströmsperren sind sogenannte Kugelrückströmsperren, bei denen in einem zylindrischen Bereich des Schneckenkopfes eine (DE 198 19 808 A1) oder mehrere (DE 1 266 486) Kugeln nach Art eines Kugetrückschlagventils in entsprechenden Bohrungen angeordnet sind. Diese Bohrungen verfügen jeweils über zwei Bereiche mit unterschiedlichem Durchmesser sowie einen Übergangsbereich, der als Dichtungsfläche dient. Der Durchmesser des in Schmelzeförderrichtung vor dem Übergangsbereich liegenden Bereichs der Bohrungen ist größer als derjenige des sich dahinter befindlichen Bereichs und dient zur Aufnahme der als Sperrorgan dienenden Kugel. Während des Dosiervorgangs hebt die durch die schmale Bohrung strömende Kunststoffschmelze die Kugel von der Dichtungsfläche ab und gibt den Durchtritt der Schmelze in den Bereich mit dem größeren Durchmesser frei. Die Schmelze kann dann durch die Bohrung hindurch und an der bzw. den Kugeln vorbei in den Schneckenvorraum strömen. Damit die Kugeln den breiteren Bereich der Bohrungen nicht verlassen können, verlaufen die Bohrungen schräg in Richtung auf die Innenwand des Plastifizierzylinders zu, wie dies bei dem zitierten Stand der Technik der Fall ist. Es gibt aber auch Ausführungsformen, bei denen die Bohrungen in den Schneckenvorraum münden; in diesem Fall werden Stege oder dergleichen in den Bohrungen vorgesehen, die ein Austreten der Kugel aus der Bohrung verhindern.

Kugelrückströmsperren haben gegenüber Ringrückströmsperren den großen Vorteil, dass sie ein besseres Ansprech- und Schließverhalten aufweisen. Nachteilig sind jedoch die Massnahmen, die zu ergreifen sind, um die Verschleißwirkung des zylindrischen Bereichs des Schneckenkopfes an der korrespondierenden Innenwand des Plastifizierzylinders möglichst gering zu hatten, denn hierzu muss die Spaltweite zwischen diesen Teilen groß genug gewählt werden. Insbesondere bei großen Schneckendurchmessern spielt dies eine bedeutende Rolle. Diese Maßnahme hat jedoch zur Folge, dass nach dem Schließen der Kugel Leckströmungen aus dem Schneckenvorraum durch den Spalt hindurch nach hinten auftreten und der beim Spritzgießen erforderliche Nachdruck nicht in dem gewünschten Maß aufgebracht werden kann. Bei der Dimensionierung der Spaltweite muss darüberhinaus die Scherempfindlichkeit der Kunststoffe berücksichtigt werden. Da sich in dem Spalt ein Schmelzefilm befindet, würde ein zu enger Spalt große Scherkräfte auf den Kunststoff ausüben, was zu Zersetzungen, Farbveränderungen oder Veränderungen von Zusatzstoffen führt, wie beispielsweise zur Oxidation flammhemmender Zusatzstoffe. Die so veränderten Schmelzebestandteile gelangen zusammen mit der sauberen Schmelze in die Kavität und führen zu Qualitätseinbussen in dem fertigen Formteil. Ein zu großer Spalt führt jedoch zu den bereits erwähnten Leckströmungen. Im Ergebnis muss bei einer Kugetrückströmsperre somit stets ein Kompromiss eingegangen werden zwischen einer geringen Leckströmung einerseits (möglichst kleine Spaltweite) und einem geringen Verschleiß der Schnecke und geringen Scherkräften im Kunststoff andererseits (möglichst große Spaltweite).

Eine weitere Rückströmsperre is aus der AT 002 063 U1 bekannt, auf des auch des Oberbegriff von Anspruch 1 beruht.

De Erfindung liegt die Aufgabe zugrunde, eine Ruckströmsperre anzugeben, die einerseits ein gutes Ansprech- und Schließverhatten aufweist und bei der andererseits sowohl Leckströmungen aus dem Schneckenvorraum als auch unerwünschte Scherkräfte auf den Kunststoff vermieden werden.

Die Lösung dieser Aufgabe erfoglt durch eine Rückströmsperre mit den Merkmalen des Patentanspruchs 1. Vorteilhafte Ausgestaltungen und Weiterentwicklungen finden sich in den Unteransprüchen 2 bis 5.

Der Hauptvorteil der vorliegenden Erfindung liegt darin, dass die Kugel zunächst zu einem schnellen Schließen des Schmelzekanals führt (schnelles Ansprechverhalten) und dass infolge des nunmehr unter dem Sperring unterbrochenen Rückflusses ein Druckgefälle entsteht, das den Sperring gegen den Druckring schiebt und den Schneckenvorraum abdichtet. Durch die Aufteilung der Funktionen "Schließen" einerseits und "Abdichten" andererseits kann die Basis des Kopfteils einen deutlichen Spalt mit der Innenwand des Plastifizierzylinders bilden. Auf diese Weise tritt in diesem Bereich keine. Reibung und kein Verschleiß auf. Femer können unerwünschte Scherkräfte auf den Kunststoff in diesem Bereich vermieden werden. Ausserdem können die Strömungsverhältnisse in dem Spalt durch geeignete Dimensionierung der Basis des Kopfteils gezielt eingestellt werden.

Nachfolgend soll die Erfindung anhand eines Ausführungsbeispiels und unter Bezugnahme auf die Figuren näher erläutert werden. In diesen Figuren ist die Rückströmsperre in der Schließstellung dargestellt.

Es zeigen:

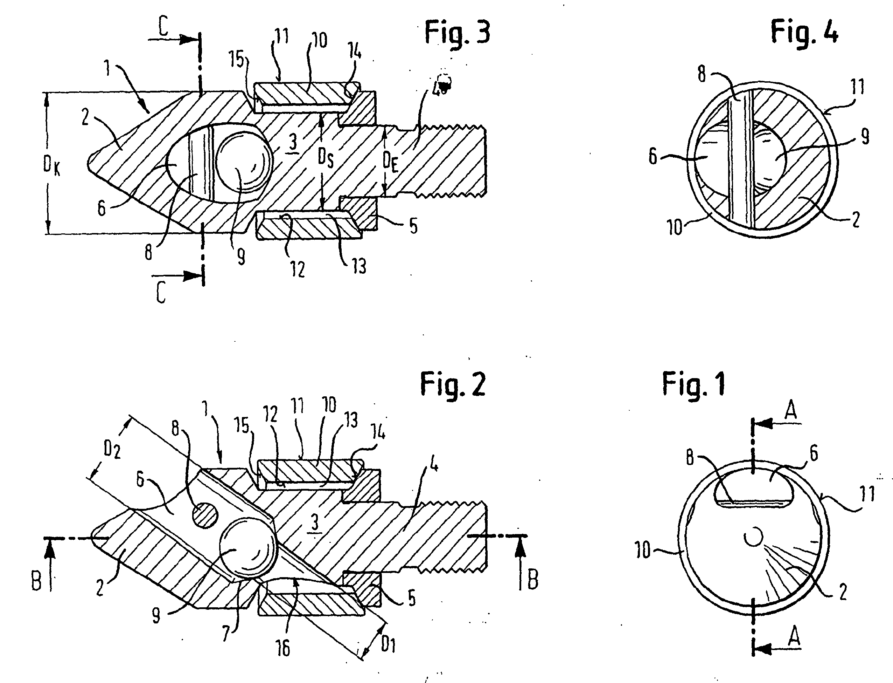

- Fig.1:: Vorderansicht der Rückströmsperre;
- Fig.2:: Längsschnitt der Rückströmsperre (Schnitt A-A in Figur 1);
- Fig.3:: um 90° gedrehter Längsschnitt der Rückströmsperre (Schnitt B-B aus Figur 2)
- Fig.4:: Querschnitt der Rückströmsperre entlang der Linie C-C von Figur 3.

Die erfindungsgemäße Rückströmsperre besitzt einen Grundkörper 1, der aus einem nach vorne konisch zulaufenden Kopfteil 2, einem zylindrischen Schaftteil 3 und einem Endstück 4 besteht. Der Durchmesser Dₖ der Basis des Kopfteils ist kleiner als der lnnendurchmesser des hier nicht dargestellten Plastifizierzylinders, so dass zwischen der Aussenseite der Basis und der Innenwand des Plastifizierzylinders ein deutlicher Spalt gebildet wird. Der Durchmesser D_{S} des Schaftteits ist gegenüber D_{K} und der Durchmesser D_{E} des Endstücks 4 ist gegenüber D_{S} reduziert. Am vorderen Ende des Endstücks 4 ist ein Druckring 5 vorgesehen, während das hintere Ende des Endstücks 4 ein Gewinde aufweist, um die Rückströmsperre in der Plastifzierschnecke befestigen zu können.

In dem Grundkörper verläuft von dem Schaftteil 3 ausgehend ein Kanal 6 mit einem ersten Bereich mit einem ersten Durchmesser D1 und einem zweiten Bereich mit einem zweiten Durchmesser D2, wobei D1 kleiner ist als D2, sowie einem Übergangsbereich 7. Zwischen einem im vorderen Bereich des Kanals 6 angeordneten Steg 8 und dem Übergangsbereich 7 ist eine Kugel 9 frei beweglich. In der hier dargestellten Schließstellung der Rückströmsperre liegt die Kugel 9 fest an dem Übergangsbereich 7 an und dichtet den Kanal 6 gegen rückfließende Kunststoffschmelze ab.

Auf dem Schaftteil 3 ist ein Sperring 10 zwischen dem Druckring 5 und dem Kopfteil 2 axial bewegbar. Der Aussendurchmesser des Sperrings ist so gewählt, dass der Sperring an der Innenwand des Plastifzierzylinders dicht anliegt und somit keine Schmelze zwischen der Aussenwand 11 und der Innenwand des Plastifzierzylinders aus dem Schneckenvorraum abströmen kann. Zwischen der Innenwand 12 des Sperrings 10 und dem Schaftteil 3 wird ein Ringspalt 13 gebildet, in dem die Eintrittsöffnung des Kanals 6 mündet. In der hier dargestellten Schließstellung der Rückströmsperre liegt der Sperring 10 mit seiner hinteren Anschlagfläche 14 dicht an dem Druckring 5 an, während in der Offenstellung der Sperring 10 mit seiner vorderen Anschlagfläche 15 an dem Kopfteil 2 anliegt. Es ist darauf zu achten, dass die Eintrittsöffnung des Kanals 6 derart in dem Schaftteil 3 angeordnet ist, dass sie in der Offenstellung des Sperrings 10 nicht von dessen vorderer Anschlagfläche 15 überdeckt ist.

In der Offenstellung, also beim Dosieren, liegt der Sperring 10 an dem Kopfteil 2 an und die hintere Anschlagfläche 14 bildet mit dem Druckring 5 einen Spalt, durch den Kunststoffschmelze in den Ringspalt 13 einströmen kann. Von dort gelangt die Kunststoffschmelze in die Eintrittsöffnung des Kanals 6, hebt die Kugel 9 aus dem Übergangsbereich 7 ab und drückt sie gegen den Steg 8. Der Kanal 6 ist frei und die Kunststoffschmelze kann an der Kugel 9 vorbei in den Schneckenvorraum fließen.

Wenn das Dosieren abgeschlossen ist und die Plastifizierschnecke zum Einspritzen der Kunststoffschmelze in das Formwerkzeug nach vorne bewegt wird, wird die Kugel 9 rasch nach hinten in den Übergangsbereich 7 gedrückt und der Kanal 6 geschlossen. Hier wird das schnelle Ansprechverhalten von Kugelrückströmsperren oder allgemein von Kugelrückschlagventilen ausgenutzt. Nachdem die Kugel geschlossen hat, wird der Rückfluß von Kunststoffschmelze zwischen dem Sperring 10 und dem Druckring 5 unterbrochen. Das dabei entstehende Druckgefälle zwischen diesem Bereich und dem Schneckenvorraum führt dazu, dass der Sperring 10 nach hinten gegen den Druckring 5 verschoben wird und der Schneckenvorraum vollkommen nach hinten abgedichtet wird. Bei weiterer Vorwärtsbewegung der Plastifizierschnecke kann nunmehr auch der gewünschte Nachdruck beim Einspritzen problemlos aufgebracht werden.

### Bezugszeichenliste

- 1: Grundkörper
- 2: Kopfteil
- 3: Schaftteil
- 4: Endstück
- 5: Druckring
- 6: Kanal
- 7: Übergangsbereich
- 8: Steg
- 9: Kugel
- 10: Sperring
- 11: Aussenwand des Sperrings
- 12: Innenwand des Sperrings
- 13: Ringspalt
- 14: Hintere Anschlagfläche des Sperrings
- 15: Vordere Anschlagfläche des Sperrings

## Patentansprüche

1. Rückströmsperre für eine in einem Plastifizierzylinder axial bewegbare Plastifzier- und Einspritzschnecke einer Spritzgießmaschine, mit einem Grundkörper (1), der ein vorzugsweise nach vorne konisch zulaufendes Kopfteil (2) und einen sich an das Kopfteil (2) nach hinten anschließenden Bereich (3) mit einem kleineren Durchmesser als die Basis des Kopfteils (2) aufweist, wobei in der Offenstellung der Rückströmsperre für den Durchfluss von Kunststoffschmelze von der Schnecke in den Schneckenvorraum ein oder mehrere in dem Grundkörper (1) verlaufende Kanäle (6) vorgesehen sind, und wobei in den Kanälen Rückschlagventile (9) vorgesehen sind,
wobei
ein an der Innenwand des Plastifizierzyfinders anliegender und axial bewegbarer Sperrring (10) vorgesehen ist, der hinter dem Kopfteil (2) des Grundkörpers (1) in dem Bereich (3) mit dem kleineren Durchmesser angeordnet ist und in diesem Bereich mit dem Grundkörper (1) einen Spalt (13) bildet, wobei die vordere Anschlagfläche (15) des Sperrrings (10) in der Offenstellung mit der Basis des Kopfteils (2) und die hintere Anschlagfläche (14) in der Schließstellung mit einem an dem Grundkörper (1) befindlichen Druckring (5) abdichtet, und wobei die Eintrittsöffnungen (16) der Kanäle (6) derart in dem Grundkörper (1) angeordnet sind, dass sie in der Offenstellung des Sperrrings (10) nicht von dessen vorderer Anschlagfläche (15) überdeckt sind
**dadurch gekennzeichnet, daß**
des Durchfluß von Kunststoffschmelze von des Schnecke in den Schnekenvorraum ausschließlich über die im Grundköper (1) verlaufenden Kanäle (6) erfolgt.

2. Rückströmsperre nach Anspruch 1,
**dadurch gekennzeichnet,**
**dass** der Aussendurchmesser der Basis des Kopfteils (2) zwischen 70% und 90%, vorzugsweise zwischen 75% und 85%, des Innendurchmessers des Plastifizierzytinders beträgt.

3. Rückströmsperren nach Anspruch 1 oder 2,
**dadurch gekennzeichnet,**
**dass** in den Kanälen (6) Kugel-Rückschlagve tile (9) vorgesehen sind.

4. Rückströmsperren nach einem der Ansprüche 1 bis 3,
**dadurch gekennzeichnet,**
**dass** die Anschlagflächen (14, 15) des Sperrings (10) und/oder die mit diesen Flächen zusammenwirkenden Teile des Grundkörpers (1) Keramik- und/oder Hartmetalleinsätze aufweisen.

5. Rückströmsperre nach einem der Ansprüche 1 bis 4,
**dadurch gekennzeichnet,**
**dass** die Anschlagflächen (14, 15) des Sperrings (10) und/oder die mit diesen Flächen zusammenwirkenden Teile des Grundkörpers (1) mit Verschleißschutzschichten versehen sind.

## Claims

1. Back-flow lock for a plasticizing and injection screw of an injection moulding machine that is axially displaceable in a plasticizing cylinder, with a main body (1) which has a preferably forward conically leading head part (2) and a region (3) adjoining the head part (2) to the rear with a smaller diameter than the base of the head part (2), whereby in the open position of the back-flow lock for the passage of plastic melt from the screw into an anterior screw space one or more canals (6) are provided running through the main body (1), and whereby check valves (9) are provided in the canals, wherein a locking ring (10) is provided which bears against the inner wall of the plasticizing cylinder and moves in an axial direction, which locking ring is positioned behind the head part (2) of the main body (1) in the region (3) with the smaller diameter, and in this region forms a gap (13) with the main body (1), whereby the leading stop surface (15) of the locking ring (10) in the open position forms a seal with base of the head part (2) and the rear stop surface (14) in the closed position with a pressure ring (5) located on the main body (1), and whereby the inlet openings (16) of the canals (6) are arranged in the main body (1) such that they are not covered in the open position of the locking ring (10) by its front stop surface (15), **characterised in that** the throughflow of plastic melt from the screw into the anterior screw space is performed solely through the canals (6) running through the main body (1).

2. Back-flow lock according to claim 1, **characterised in that** the base of the head part (2) has an external diameter that is between 70% and 90%, preferably between 75% and 85%, of the internal diameter of the plasticizing cylinder.

3. Back-flow lock according to claim 1 or 2, **characterised in that** ball-check valves (9) are provided in the canals (6).

4. Back-flow lock according to one of claims 1 to 3, **characterised in that** the stop surfaces (14, 15) of the locking ring (10) and/or the parts of the main body (1) interacting with said surfaces have ceramic and/or hard metal inserts.

5. Back-flow lock according to one of claims 1 to 4, **characterised in that** the stop surfaces (14, 15) of the locking ring (10) and/or the parts of the main body (1) interacting with said surfaces are provided with wear-resistant protective layers.

## Revendications

1. Clapet antiretour pour une vis de plastification et d'injection pouvant se déplacer axialement dans un cylindre de plastification d'une machine à mouler par injection, avec un corps de base (1) qui comporte une tête (2) de préférence effilée vers l'avant et une zone (3) adjacente à la tête (2) vers l'arrière avec un diamètre inférieur à la base de la tête (2), un ou plusieurs canaux (6) qui traversent le corps de base (1) étant prévus en position ouverte du clapet antiretour pour le passage de plastique en fusion de la vis dans l'antichambre de la vis et des soupapes d'arrêt (9) étant prévues dans les canaux,
une bague de fermeture (10) adjacente à la paroi intérieure du cylindre de plastification et pouvant être déplacée axialement, qui est disposée derrière la tête (2) du corps de base (1) dans la zone (3) au diamètre inférieur et forme une fente (13) avec le corps de base (1) dans cette zone étant prévue, la surface de butée avant (15) de la bague de fermeture (10) étanchant avec la base de la tête (2) en position ouverte et la surface de butée arrière (14) avec une bague de serrage (5) qui se trouve sur le corps de base (1) en position fermée, les orifices d'entrée (16) des canaux (6) étant disposés dans le corps de base (1) de manière à ne pas être recouverts par la surface de butée avant (15) de la bague de fermeture (10) en position ouverte de cette dernière,
**caractérisé en ce que**
le passage de plastique en fusion de la vis dans l'antichambre de la vis a exclusivement lieu via les canaux (6) qui traversent le corps de base (1).

2. Clapet antiretoùr selon la revendication 1,
**caractérisé en ce que**
le diamètre extérieur de la base de la tête (2) correspond à 70 % à 90 %, de préférence à 75 % à 85 %, du diamètre intérieur du cylindre de plastification.

3. Clapet antiretour selon la revendication 1 ou 2,
**caractérisé en ce que**
des soupapes d'arrêt à boulet (9) sont prévues dans les canaux (6).

4. Clapet antiretour selon une des revendications 1 à 3,
**caractérisé en ce que**
les surfaces de butée (14, 15) de la bague de fermeture (10) et/ou les parties du corps de base (1) qui agissent avec ces surfaces comportent des inserts en céramique et/ou en métal dur.

5. Clapet antiretour selon une des revendications 1 à 4,
**caractérisé en ce que**
les surfaces de butée (14, 15) de la bague de fermeture (10) et/ou les parties du corps de base (1) qui agissent avec ces surfaces sont dotées de couches de protection contre l'usure.
